Europäisches Patentamt

European Patent Office

Office européen des brevets

(11) Publication number: **0 245 545**
**A1**

## (12) EUROPEAN PATENT APPLICATION

(21) Application number: **86303577.0**

(22) Date of filing: **12.05.86**

(51) Int. Cl.⁴: **B23H 7/26**

(43) Date of publication of application:
**19.11.87 Bulletin 87/47**

(84) Designated Contracting States:
**BE CH DE FR GB LI SE**

(71) Applicant: **Corning Glass Works**
**Sullivan Park FR-212**
**Corning New York 14831(US)**

(72) Inventor: **Peters, Willis Nell**
**47 Pyrex Street**
**Corning New York 14830(US)**

(74) Representative: **Boon, Graham Anthony et al**
**Elkington and Fife High Holborn House 52/54**
**High Holborn**
**London, WC1V 6SH(GB)**

(54) **Electrochemical stem drilling electrode mounting.**

(57) An electrochemical stem drilling apparatus hollow-tube electrode mounting system includes a pair of clamp members (52,54), each positionable adjoining a feed head (12) on either side of the plurality of hollow-tube electrodes (14) and each having a plurality of elongated grooves to more securely hold the hollow-tube electrodes in a predetermined orientation and to provide an increased area of electrical contact with the electrodes. A sealing layer (32) of silicon or other comparable material extends around each of the electrodes where they pass from a feed head of the apparatus preventing electrolyte leakage.

Fig. 1

EP 0 245 545 A1

# ELECTROCHEMICAL STEM DRILLING ELECTRODE MOUNTING

The invention relates to electrochemical stem drilling apparatus employing a plurality of hollow-tube electrodes and, in particular, to mounting such electrodes in the apparatus.

Electrochemical stem drilling apparatus are well known. Such devices employ a charged, fluid electrolyte directed against a metallic workpiece having an opposing charge. Metal is deplated from the workpiece and carried away by the electrolyte. The electrolyte is delivered to the workpiece by one or more hollow-tube electrodes coupled with a manifold supplying liquid electrolyte to an end of each of the tubes. Bores less than 2 mm in diameter can be "drilled" up to almost 40 cm in depth by such devices.

A number of systems have been employed for mounting the hollow-tube electrode to the manifold. Initially, a pair of plates each typically about 3 mm (1/8 inch) thick and positioned substantially perpendicular to the electrodes were provided covering an open end of the manifold. Slightly oversized holes were provided through each of the plates for receiving the electrodes. The plates were biased against opposing sides of the electrodes, trapping them therebetween. Such systems relied upon the interfit and labyrinth formed by the multiple layers of plate to prevent electrolyte leaking from the feed head where the electrode passed through the plates. Fluid leaking down an outer surface of the hollow-tube electrodes provides an alternate current path affecting the uniformity of the deplating process. The hollow-tube electrodes and manifold are typically made of titanium. Leaking electrolyte contacting an unprotected and exposed surface of the titanium can oxidize, forming an electrically resistive coating which may interfere with the electrical connection between the hollow-tube electrodes and the apparatus.

In a second type of mounting system previously employed to better control the electrolyte leakage problem, a single plate was provided with a number of slightly oversized openings for receiving an equal number of electrodes. A layer of a low temperature metallic alloy such as SarcoTM was cast about 12 mm thick (1/2 inch) in a reservoir portion on one side of the plate through which the electrodes pass. On that layer was cast an approximately equally thick layer of beeswax to protect the alloy from contact with the electrolyte. The plate was then attached to the open end of the manifold. Both the alloy and the beeswax were cast as hot liquids and solidified as they cooled. Having positive coefficient of thermal expansion, each contracted upon solidifying and cooling. This led to the retraction of the alloy and beeswax layers from around the hollow-tube electrodes. While electrolyte leakage is not entirely contained by this system, it is better controlled than by the first system.

Objects of the invention in its various aspects and embodiments include the provision of a means and method for mounting a plurality of hollow-tube electrodes in an electrochemical stem drilling apparatus so as to prevent electrolyte leakage through the mounting, the provision of a means and method for more securely holding a plurality of hollow-tube electrodes of an electrochemical stem drilling apparatus in a predetermined orientation, and the provision of a means and method for maintaining good electrical contact between the apparatus power supply and the electrode and for sealing the apparatus to minimize the incidence of electrically insulative oxide build up between the electrode holding mechanism and the electrodes.

According to the invention, an electrode mounting system for use with an electrochemical stem drilling apparatus employing a plurality of hollow-tube electrodes, an electrolyte feed head assembly with one or more openings for receiving an end of each of the plurality of hollow-tube electrodes and feeding a fluid electrolyte into each of said hollow-tube electrode ends, with improved electrode positioning capability is provided by a first clamp member adapted for positioning adjoining the one or more feed head openings and against the first side of each of the plurality of hollow-tube electrodes and a second clamp member adapted for positioning also adjoining the one or more feed head openings and against an opposing side of each of the plurality of hollow-tube electrodes fixing the plurality of hollow-tube electrodes against the first clamp member.

Improved electrode positioning and electrode electrical contact is achieved by making the first and second clamp members sufficiently thick so as to contact each of the plurality of hollow-tube electrodes over a length greater than that previously employed by any existing system. The clamp members preferably contact each of the plurality of hollow-tube electrodes over a length greater than about 13 mm and, more preferably, over a length greater than about 25 mm.

To enhance the tube holding capabilities of this system, a like plurality of grooves are provided along a surface of the first clamp member, each sized to receive said first side of a hollow-tube electrode and contact the electrode along the length of its outer surface.

Another important feature contributing to the electrode fixing characteristics of the system is the provision of a like plurality of grooves along a surface of the second clamp member sized and positioned along the surface to receive and contact said opposing side of each of the hollow-tube electrodes received in the grooves of a first clamp member.

Still another aspect contributing to the improved electrode holding capability of the invention is that a first one of the two clamp members is rigidly mounted to the feed head and a clamp holder with clamp screw, or other suitable means, is provided for holding the first and second clamp members together.

Also contributing to the tube electrode properties of this system is the provision of a layer of sealing material forming a seal completely surrounding each of the electrodes and extending between each of the openings in the feed head and each of the electrodes. The seal layer constitutes another important aspect of the invention. The layer forms a seal between each of the plate openings receiving ends of the hollow-tube electrodes and each of the inserted electrodes. The seal completely surrounds each of the hollow-tube electrodes. The layer is formed from a material which is castable and curable at room temperature essentially without contraction from said openings and said electrolyte. Preferably, silicone is used as the seal material.

These and other aspects of the invention will be apparent to one skilled in the art upon review of the accompanying drawings and the detailed description of the invention.

In the accompanying drawings:

Fig. 1 is a sectioned side elevation of a diagrammatic electrochemical stem drilling apparatus incorporating the preferred embodiment electrode mounting system of the invention.

Fig. 2 is a plan diagrammatic view of the electrode clamp assembly of the invention along lines 2-2 of Fig. 1.

Fig. 3 is a perspective diagrammatic view of a face of one of the two clamps of the clamp assembly of Fig. 2.

Fig. 4 is a plan diagrammatic view of the mounting plate of the electrolyte feed head and silicone seal layer along lines 4-4 of Fig. 1.

Fig. 5 is a local sectioned diagrammatic side elevation of the mounting plate, seal layer and a hollow-tube electrode along lines 5-5 of Fig. 4.

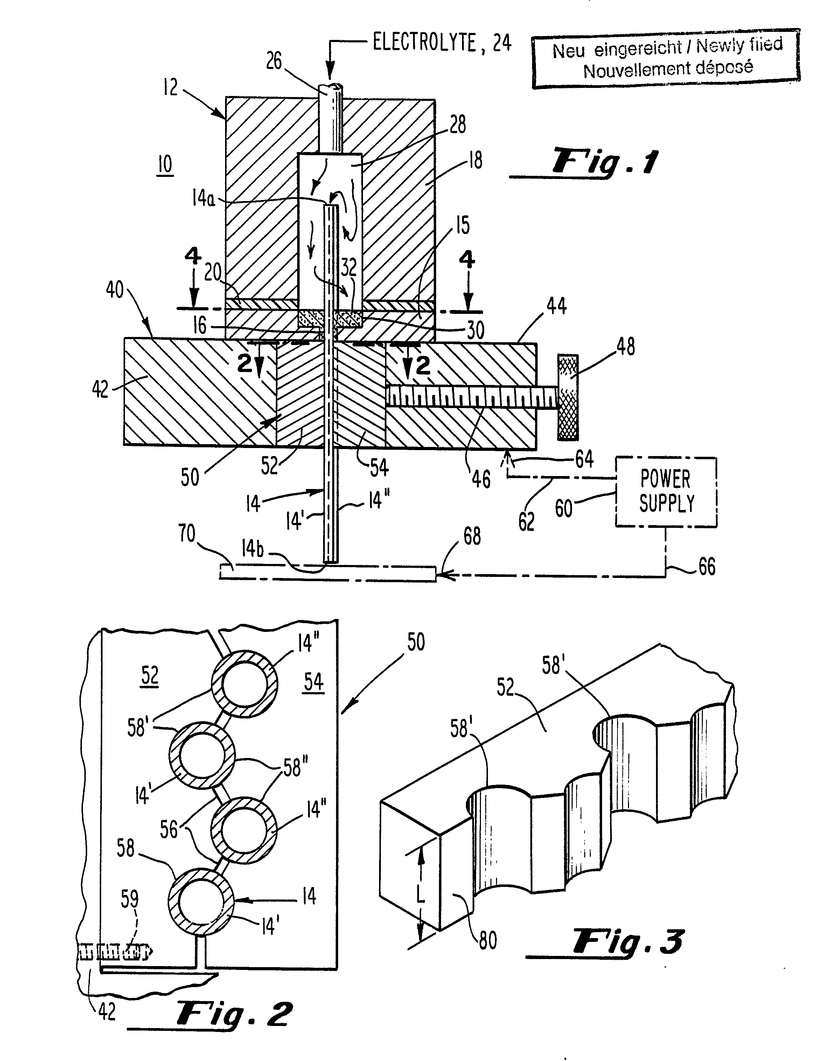

The electrochemical stem drill head 10 depicted in Fig. 1, includes a feed head assembly 12 mounting a plurality of hollow-tube electrodes 14 (a staggered pair being depicted), an electrode clamp assembly 50 and a holder assembly 40. The latter is rigidly mounted to the feed head 12 fixingly holding the clamp assembly 50. The drill head 10 is mounted to a drive mechanism (not depicted) which moves the drill head 10 to and from a metallic workpiece 70 indicated in phantom.

The feed head 12 includes a seal plate 15 having a plurality of openings 16, one of which is depicted, each receiving one of the electrodes 14. A manifold 18 is coupled to the top side of the seal plate 15 by suitable means, such as screws or bolts (not depicted), passing between the two elements 15 and 18. A Viton™ gasket 20 provides a seal between the seal plate 15 and facing end of the manifold 18. A fluid electrolyte 24, indicated by arrows, is fed through a pipe 26 into a chamber 28 formed by the hollow central portion of the manifold 18 and passes from the chamber into an end 14a of each of the hollow-tube electrodes 14 received in the feed head. A central trough 30 in the seal plate 15 encompasses the plurality of openings 16 and receives a silicone seal layer 32.

On a side of the seal plate 15 opposite the manifold 18, a holder assembly 40 is rigidly mounted to the feed head 12 again by suitable and conventional means such as bolts and threaded bores (also not depicted). The holder assembly 40 includes a pair of arms 42 and 44 on opposing sides of the clamp assembly 50. The block arm 44 has a threaded bore 46 receiving a clamp screw 48. The holder assembly 40 with clamp screw 48 rigidly mounts the clamp assembly 50 to the feed head 12 while simultaneously holding the two clamps 52 and 54 of the clamp assembly 50 together.

Depicted in phantom are additional remaining circuit elements of the electrochemical stem drilling machine, including a direct current power supply 60, a first lead 62 from one side or pole of the power supply 40 to a contact 64 coupling the lead 62 with the holder assembly 40 and a second lead 66 coupled by means of an appropriate contact 68 to the metallic workpiece 70.

Operation of the apparatus 10 is as follows. The electrolyte 24 is supplied under pressure through the tube 26 into the chamber 28 of the feed head 12 and hence into the receiving end 14a of each of the plurality of electrodes 14 and expelled from the opposing end 14b of each of the electrodes against the facing surface of the metallic workpiece 70. The power supply 60 maintains a negative potential on line 62 and a positive potential on line 66 which, typically, is reversed for a fraction of a second every several seconds to prevent deplated metal carried by the recirculating electrolyte from plating to the electrodes 14. The power supply with which applicants are familiar maintains a potential difference of about 8 volts and supplies approximately 1 amp of current per electrode and is used with an electrolyte formed by 16% nitric acid in solution with water. Bores overcut only about 0.38 mm (0.015 inch) in diameter greater than the diameter of the hollow-tube electrodes have been achieved. All parts of the feed head 12, holder assembly 40 and clamp assembly 50, except for the Viton™ gasket 20 and silicone seal layer 32, are titanium to resist electrolytic action. The hollow-tube electrodes are also typically provided with a non-conductive coating, such as Alkanex™, along their outer surfaces where they extend from the clamp assembly 50 thereby also insulating the exposed end of the electrodes from the workpiece 70. As an example, tubes about 23 cm (9 inches) in length were coated about 16.5 cm (6.5 inches) along their length while the remaining 6.5 cm (2.5 inches) were held by the clamp assembly 50 in feed head 12.

The first clamp member 52 of the assembly 50 is sized and shaped for positioning facing the lower surface of the feed head 12 and seal plate 15 directly adjoining the plurality of feed head openings 16 through the seal plate 15 and against the first side 14' of each of the hollow-tube electrodes 14. The second clamp member 54 is similarly suitably sized and shaped for positioning facing the lower end of the feed head 12 and seal plate 15 directly adjoining the openings 16 and against an opposing side 14″ of each of the hollow-tube electrodes. Although no space between the lower surface of the plate 15 and upper surface of each of the clamp members 52 and 54 is shown, members 52 and 54 can be in a spaced adjoining relationship, separated from the plate 15, if desired. The one clamp member 52 is fixedly and rigidly mounted to the arm 42 to the holder assembly 40 by suitable means. Having one clamp member attached to the holder 40 is very helpful during set-up. One of several screws 59 provided for that purpose is depicted in Fig. 2 engaged with a suitable threaded bore in the clamp member 52. The second clamp assembly member 54 is movable and is compressed against the opposing side 14″ of each of the electrodes 14 by means of the screw clamp 48 fixing the tubes 14 against the facing surface of the first clamp member 52.

The facing surface 80 of the first clamp member 52 is best seen in Fig. 3 and includes a plurality of grooves 58' each extending along the height of the surface and sized and shaped to receive a hollow-tube electrode and contact the electrode along a length of its adjoining side 14'. As is best seen in Fig. 2, the movable clamp member 54 includes a similar surface facing the opposing side 14″ of each of the plurality electrodes 14 with a complementary plurality of grooves sized and positioned along the surface to receive and contact the opposing sides 14″ of each of the hollow-tube electrodes 14 received in the grooves 58' of the first clamp member.

As is further depicted in Fig. 3, the clamp assembly member 52 has a vertical length dimension indicated by the arrowed line L, over which the received tube electrodes 14 are contacted. Member 54 is similarly sized. L is greater than the comparable dimension of the existing prior art mounting systems, (i.e. greater than at least 13 mm) and preferably more than 25 mm in length, to provide improved electrical contact and electrode holding capability.

The clamp assembly 50 is suggestedly formed by cutting a solid block of titanium by suitable means such as a traveling wire electric discharge machine. Slots 56 formed by the traveling wire electrode connect circular bores 58, also cut by the traveling wire electrode. The bores are cut to the outer diameters of the electrodes 14 and the grooves lapped as needed to insure a tight, proper fit. The staggered circular bores 58 in the assembly 50 allow the positioning of two staggered rows of hollow-tube electrodes 14 for the simultaneous drilling of two staggered rows of bores in the workpiece.

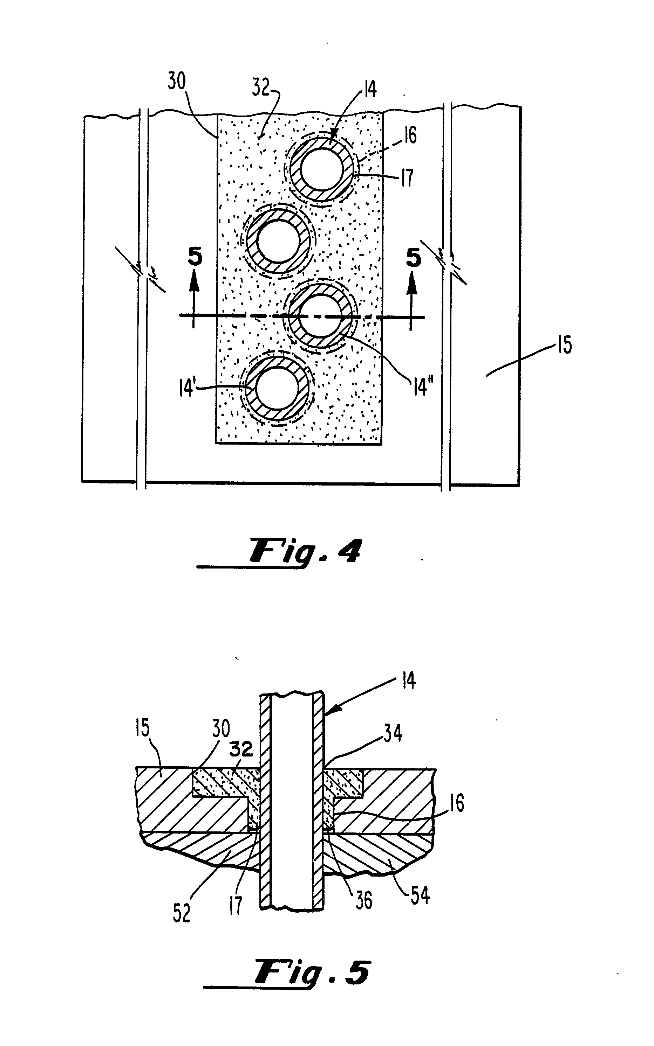

Referring now to Figs. 4 and 5, there is depicted in greater detail the silicone seal layer 32 in the central trough 30 of the seal plate 15 encompassing the openings 16 (depicted in phantom in Fig. 4) through the plate 15 and through which the electrodes 14 are passed. As is seen in both figures, the openings 16 are typically oversized and leave a gap 17 between each opening 16 and the outer surface of the received electrode 14. As best seen in Fig. 4, the layer 32 extends completely around each of the plurality of hollow-tube electrodes and extends between each of the openings 16 and each of the electrodes 14 to form, as is depicted in Fig. 5, a circumferential seal 34 completely surrounding each of the hollow-tube electrodes, as well as a seal plug 36 in the gap 17 between each of the electrodes and the sides of the surrounding openings 16, thereby completely sealing the feed head 12 at the lower end where the tube electrodes pass into the clamp assembly 50. General Electric® R.T.V. 11 silicone has been successfully employed with the aforesaid electrolyte solution. The silicone is mixed at room temperature and cast into the trough 30. Because the silicone is both cast and cured at room temperature essentially without contraction from the openings in the electrodes, a complete seal between the electrodes and openings can be assured. Other plastics and polymerizable materials less convenient to use than silicone undoubtedly could be employed.

The described mounting system has enabled bores approximately 1.5 mm in diameter to be drilled ±.05 mm locational accuracy and diametric variation.

While a preferred embodiment has been described incorporating a number of inventive features, the invention is not limited to the particular described preferred embodiment, but is defined by the following claims.

## Claims

1. An electrode mounting system for use with the electrochemical stem drilling apparatus employing a plurality of hollow-tube electrodes, an electrolyte feed head (12) with one or more openings for receiving an end of each of the plurality of hollow-tube electrodes (14) and feeding a fluid electrolyte (24) into each of the hollow-tube electrolyte ends (14a), comprising:
a first clamp member (52) adapted for positioning adjoining the one or more feed head openings and against a first side of each of said plurality of hollow-tube electrodes; and
a second clamp member (54) adapted for positioning also adjoining the one or more feed head opening and against an opposing side of each of said plurality of hollow-tube electrodes fixing said plurality of hollow-tube electrodes against said first clamp member.

2. An electrode mounting system according to claim 1 wherein each of said first and second clamp members (52,54) contacts each of said plurality of hollow-tube electrodes (14) over a length at least greater than 13 mm, or preferably greater than 25 mm.

3. An electrode mounting system according to claim 1 or 2 further comprising:
an electrode coupling between at least one of said first and second clamp members and one side of an electric power source of the apparatus.

4. An electrode mounting system according to any preceding claim further comprising:
a plurality of grooves (58) spaced along a surface of the first clamp member (52), each groove sized to receive and contact the first side of a hollow-tube electrode.

5. An electrode mounting system according to claim 4 further comprising:
a like plurality of grooves along a surface of a second clamp member (54), each sized and positioned along said surface to receive and contact the opposing side of a hollow-tube electrode received in a groove of the first clamp member.

6. An electrode mounting system according to claim 4 or 5 further comprising:
holder means (40) for holding said first and second clamp members against said hollow-tube electrodes.

7. An electrode mounting system according to any one of claim 4 to 6 wherein at least one of the clamp members is fixedly attached to said feed head means.

8. An electrode mounting system according to any one of claims 4 to 7 wherein said grooves are at least about 25 mm in length.

9. An electrode mounting system according to any preceding claim further comprising:
a layer of sealing material forming seals (32) completely surrounding each of said plurality of hollow-tube electrodes (14) and extending between each of said plurality of electrodes and each of said one or more feed head means openings (16) completely covering any gap therebetween.

10. An electrode mounting system according to claim 9, wherein said layer of sealing material forms an electrolyte leak proof seal between said one or more openings of the feed head means and each of said plurality of hollow-tube electrodes and completely around each of said hollow-tube electrodes, the layer being formed from a material castable and curable at room temperature essentially without contraction from said openings and said electrodes.

ELECTROLYTE, 24

*Fig. 1*

POWER SUPPLY

*Fig. 2*

*Fig. 3*

0 245 545

_**Fig. 4**_

_**Fig. 5**_

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-1 318 606 (GENERALE AERONAUTIQUE DASSAULT)<br>* Page 3, column 1; figures 4,5 *<br><br>--- | 1,5-7 | B 23 H 7/26 |
| A | US-A-3 352 958 (GENERAL ELECTRIC)<br>* Column 2, line 68 - column 3, line 45 *<br><br>----- | 1 | |

| | TECHNICAL FIELDS SEARCHED (Int. Cl.4) |
|---|---|
| | B 23 H |

The present search report has been drawn up for all claims

| Place of search | Date of completion of the search | Examiner |
|---|---|---|
| THE HAGUE | 12-01-1987 | DAILLOUX C. |